# EUROPÄISCHE PATENTANMELDUNG

(11) **EP 3 421 931 A1**
(43) Veröffentlichungstag der Anmeldung: **02.01.2019**
(21) Anmeldenummer: 18170799.3
(22) Anmeldetag: 04.05.2018
(51) Int. Cl.: G01B 21/04

(54) **KOORDINATENMESSGERÄT ZUR KOORDINATENMESSUNG VON WERKSTÜCKEN SOWIE VERFAHREN ZUR KOORDINATENMESSUNG AN WERKSTÜCKEN AUF EINEM KOORDINATENMESSGERÄT**

(30) Priorität: 30.06.2017 DE 102017114713
(71) Anmelder: Hexagon Metrology GmbH, 35578 Wetzlar (DE)
(72) Erfinder: Kirchhof, Michael, 56457 Westerburg (DE)
(74) Vertreter: Knefel, Cordula

(57) **Zusammenfassung**

Verfahren und Koordinatenmessgerät zur Koordinatenmessung an Werkstücken mit einem Tastkopf, wobei Maßstabswerte ermittelt werden, wobei aufgrund der Maßstabswerte die Position des Tastkopfes bei der Berührung des Werkstückes ermittelt wird, wobei der Tastkopf einen Beschleunigungssensor aufweist, wobei das Beschleunigungssignal des Beschleunigungssensors des Tastkopfes und ein Positionssignal eines Maßstabes einer Achse und/oder wenigstens eines weiteren Beschleunigungssensors, der die Beschleunigung wenigstens einer mechanischen Vorrichtung des Koordinatenmessgerätes erfasst, durch Integrieren und/oder Differenzieren zu miteinander verrechenbaren physikalischen Größen umgewandelt werden, wobei aus diesen Größen die Differenz gebildet wird, wobei die Differenz zur Korrektur der Messwerte und/oder des Verfahrweges und/oder der Verfahrgeschwindigkeit verwendet werden. (Fig. 1).

## Beschreibung

Die Erfindung betrifft ein Koordinatenmessgerät zur Koordinatenmessung von Werkstücken sowie ein Verfahren zur Koordinatenmessung an Werkstücken auf einem Koordinatenmessgerät.

Zum Stand der Technik (DE 10 2010 018 250 A1) gehört ein Verfahren zur Koordinatenmessung an Werkstücken auf einem Koordinatenmessgerät. Das Koordinatenmessgerät weist einen Tastkopf auf, der einen Taster und einen dem Taster zugeordneten Tastsensor enthält, der bei Berührung eines Werkstückes mit dem Taster ein Tastsignal erzeugt, anhand dessen Maßstabswerte ermittelt werden, die die Position des Tastkopfes bei der Berührung des Werkstückes repräsentieren, wobei der Tastkopf zusätzlich einen Beschleunigungssensor enthält, der bei Beschleunigungen des Tastkopfes ein Beschleunigungssignal erzeugt, wobei das Tastsignal und das Beschleunigungssignal zur Auswertung einer Steuer- und Auswerteeinheit zugeführt werden und wobei die Steuer- und Auswerteeinheit die besagten Maßstabswerte in der Weise ermittelt, indem durch Subtraktion des Tastsignals und des Beschleunigungssignals voneinander ein Auswertesignal ermittelt wird und erst anhand dieses Auswertesignals die Maßstabswerte ermittelt werden, die die Position des Tastkopfes bei der Berührung des Werkstückes repräsentieren.

Gemäß diesem Stand der Technik wird der Beschleunigungssensor verwendet, um das Tastkopfsignal zu überprüfen, dahingehend, ob eine Berührung vorliegt oder nicht.

Gemäß diesem Stand der Technik soll ein Verfahren zur Koordinatenmessung angegeben werden, bei der fehlerhafte Antastungen verhindert werden, ohne die Bedingungen zu verändern, unter denen eine Antastung erkannt wird.

Dieses zum Stand der Technik gehörende Verfahren gibt kein Korrekturverfahren an, mit dem eine Verformung der Strukturen des Koordinatenmessgerätes bei hohen Geschwindigkeiten erfasst und korrigiert werden kann.

Das der Erfindung zugrundeliegende technische Problem besteht darin, ein Koordinatenmessgerät zur Koordinatenmessung von Werkstücken sowie ein Verfahren zur Koordinatenmessung an Werkstücken anzugeben, mit denen eine Verformung der Strukturen des Koordinatenmessgerätes bei Messungen mit hohen Geschwindigkeiten korrigiert werden können.

Dieses technische Problem wird durch ein Verfahren mit den Merkmalen gemäß Anspruch 1 sowie durch ein Koordinatenmessgerät mit den Merkmalen gemäß Anspruch 11 gelöst.

Das erfindungsgemäße Verfahren zur Koordinatenmessung an Werkstücken auf einem Koordinatenmessgerät mit einem Tastkopf und/oder einem optischen Sensorwobei der Tastkopf und/oder der optische Sensor einen Beschleunigungssensor aufweist, der bei Beschleunigungen des Tastkopfes und/oder des optischen Sensors ein Beschleunigungssignal erzeugt, wobei der Tastkopf und/oder der optische Sensor mit mechanischen Vorrichtungen relativ zum Werkstück bewegt wird, wobei mit Maßstäben, aus denen Maßstabswerte ermittelt werden, die Position des Tastkopfes und/oder des optischen Sensors als Positionswert für mindestens eine Achse ermittelt wird, zeichnet sich dadurch aus, dass das Beschleunigungssignal des Beschleunigungssensors des Tastkopfes und/oder des optischen Sensors und ein Positionssignal eines Maßstabes einer Achse und/oder wenigstens eines weiteren Beschleunigungssensors, der an einer der mechanischen Vorrichtungen angeordnet ist und die Beschleunigung der wenigstens einen mechanischen Vorrichtung erfasst, durch Integrieren und/oder Differenzieren zu miteinander verrechenbaren physikalischen Größen umgewandelt werden, und dass aus diesen Größen die Differenz gebildet wird, und dass die Differenz zur Korrektur der Messwerte und/oder des Verfahrweges und/oder der Verfahrgeschwindigkeit verwendet werden.

Mit dem erfindungsgemäßen Verfahren ist es möglich, Korrekturwerte zu ermitteln, die Messfehler kompensieren, die beim Messen mit hohen Geschwindigkeiten auftreten, dadurch dass sich die Struktur des Koordinatenmessgerätes verformt. Diese Verformung bildet sich als Formabweichung in den Messergebnissen ab.

Geht man beispielsweise von einem Koordinatenmessgerät in Portalbauweise aus, so weist das Portal zwei Füße auf, die das Portal in einer Achse, beispielsweise der X-Achse des Koordinatenmessgerätes bewegen. Ein Fuß ist ein angetriebener Fuß. Der zweite Fuß läuft in der Regel nach.

Um beispielsweise das Nachlaufen des einen Fußes und die damit einhergehende Verformung des Portales zu erfassen, kann entweder ein Positionswert des Maßstabes, der beispielsweise am Werkstücktisch angeordnet ist und die Position des angetriebenen Fußes erfasst und verwendet werden, um einen Korrekturwert zu ermitteln. Es ist auch möglich, in dem angetriebenen Portalfuß einen weiteren Beschleunigungssensor anzuordnen, der ein Beschleunigungssignal liefert.

In dem Tastkopf und/oder dem optischen Sensor ist ein Beschleunigungssensor angeordnet, der bei Beschleunigungen des Tastkopfes und/oder des optischen Sensors ein Beschleunigungssignal erzeugt. Dieses Beschleunigungssignal wird mit entweder der Maßstabsposition, das heißt der Position beispielsweise des Portales oder einer anderen bewegten Struktur des Koordinatenmessgerätes verrechnet, oder es wird das Beschleunigungssignal des Beschleunigungssensors des Tastkopfes und/oder des optischen Sensors mit dem Beschleunigungssignal des weiteren Beschleunigungssensors, der an der mechanischen Vorrichtung angeordnet ist, verrechnet. Hierzu werden durch Integrieren und/oder Differenzieren die Beschleunigungssignale oder Positionssignale zu miteinander verrechenbaren physikalischen Größen umgewandelt. Das bedeutet, dass entweder sämtliche Signale in Beschleunigungssignale, Geschwindigkeiten oder Positionswerte durch Integrieren und/oder Differenzieren umgewandelt werden. Anschließend kann aus diesen Größen die Differenz gebildet werden. Diese Differenz wird zur Korrektur der Messwerte und/oder des Verfahrweges und/oder der Verfahrgeschwindigkeit verwendet.

Über die beiden Werte, das heißt das Beschleunigungssignal des Beschleunigungssensors des Tastkopfes und/oder des optischen Sensors und das Positionssignal oder das Beschleunigungssignal des weiteren Beschleunigungssensors, der an einer mechanischen Vorrichtung angeordnet ist, wird eine Relativbewegung zwischen den Komponenten erfasst. Hierdurch können Dynamikunterschiede erfasst werden. Diese Relativbewegung kann beispielsweise in dem beschriebenen Nachlaufen eines Portalfußes liegen.

Gemäß einer vorteilhaften Ausführungsform der Erfindung ist vorgesehen, dass der Tastkopf einen Taster und einen dem Taster zugeordneten Tastsensor aufweist, der bei Berührung eines Werkstückes mit dem Taster ein Tastsignal erzeugt, bei dem Maßstabswerte ermittelt werden, wobei aufgrund der Maßstabswerte die Position des Tastkopfes bei der Berührung des Werkstückes ermittelt wird. Es handelt sich hierbei um ein taktiles Antastvefahren.

Eine andere vorteilhafte Ausführungsform der Erfindung sieht vor, dass der Tastkopf einen optischen Sensor aufweist, mit dem eine berührungslose Messung des Werkstückes erfolgt.

Der Taster und der optische Sensor können an dem Tastkopf eingewechselt werden.

Gemäß dem erfindungsgemäßen Verfahren besteht auch die Möglichkeit, dass der gesamte Tastkopf gegen einen optischen Sensor eingewechselt wird.

Es gibt also die folgenden Möglichkeiten:
a) an dem Tastkopf ist ein taktiler und/oder ein optischer Sensor angeordnet, oder
b) es ist an Stelle des Tastkopfes ein optischer Sensor vorgesehen.

Das erfindungsgemäße Verfahren bezieht sich auf die Anordnung eines Beschleunigungssensors in dem Tastkopf oder in dem optischen Sensor.

Gemäß einer vorteilhaften Ausführungsform der Erfindung ist vorgesehen, dass das Beschleunigungssignal des Beschleunigungssensors des Tastkopfes und/oder des optischen Sensors zweimal integriert wird und dass aus einem Positionswert einer Achse und dem integrierten Wert des Beschleunigungssignales eine Differenz gebildet wird.

Es besteht auch die Möglichkeit, dass der Positionswert einer Achse zweimal differenziert wird und dass die Differenz aus dem differenzierten Positionswert und dem Beschleunigungssignal des Beschleunigungssensors des Tastkopfes und/oder des optischen Sensors gebildet wird.

Auch hierbei werden wieder die verschiedenen Größen jeweils zu miteinander verrechenbaren physikalischen Größen durch Differenzieren und/oder Integrieren umgewandelt, um die Differenz der Größen zu bilden. Diese Differenz kann wiederum zur Korrektur der Messwerte und/oder des Verfahrweges und/oder der Verfahrgeschwindigkeit verwendet werden.

Gemäß einer weiteren vorteilhaften Ausführungsform der Erfindung ist vorgesehen, dass mit dem wenigstens einen weiteren Beschleunigungssensor, der an wenigstens einer der mechanischen Vorrichtungen angeordnet ist, die Beschleunigung der wenigstens einen mechanischen Vorrichtung erfasst wird und dass die Differenz des Beschleunigungssignales des an dem am Tastkopf und/oder des an dem optischen Sensor angeordneten Beschleunigungssensors und dem Beschleunigungssignal des wenigstens einen zusätzlichen Beschleunigungssensors wenigstens einmal integriert wird, oder dass das Beschleunigungssignal des an dem Tastkopf und/oder an dem optischen Sensor angeordneten Beschleunigungssensors und des Beschleunigungssensors des wenigstens einen weiteren Beschleunigungssensors wenigstens einmal integriert wird und dass aus den integrierten Werten die Differenz gebildet wird.

Bei dieser Ausführungsform sind zwei Beschleunigungssensoren vorgesehen, nämlich einmal der Beschleunigungssensor in dem Tastkopf und/oder in dem optischen Sensor und ein weiterer Beschleunigungssensor, der an wenigstens einer der mechanischen Vorrichtungen angeordnet ist.

Bei diesem Ausführungsbeispiel kann entweder die Differenz der beiden Beschleunigungssignale einmal integriert werden. Es besteht auch die Möglichkeit, beide Beschleunigungssignale erst zu integrieren und anschließend aus den integrierten Werten die Differenz zu bilden. Auch diese Werte können wiederum zur Korrektur der Messwerte und/oder des Verfahrweges und/oder der Verfahrgeschwindigkeit verwendet werden.

Gemäß einer weiteren vorteilhaften Ausführungsform der Erfindung wird das Beschleunigungssignal des Beschleunigungssensors des Tastkopfes und/oder des optischen Sensors einmal integriert und ein Positionswert einer Achse wird einmal differenziert und aus diesen Werten wird eine Differenz gebildet. In diesem Fall ist als physikalische Größe eine Geschwindigkeit vorgesehen. Es kann die Differenz aus diesen Geschwindigkeiten gebildet werden. Es besteht anschließend die Möglichkeit, diese Geschwindigkeit zu integrieren. Hierdurch erhält man ein Positionssignal, welches wiederum zur Korrektur herangezogen werden kann.

Gemäß einer weiteren vorteilhaften Ausführungsform der Erfindung ist vorgesehen, dass die physikalischen Größen "Position" zweimal differenziert werden, oder die physikalischen Größen "Beschleunigung" zweimal integriert werden. Das bedeutet, dass entweder die miteinander zu verrechnenden physikalischen Größen in Beschleunigungswerte umgewandelt werden und miteinander verrechnet werden, oder dass die Beschleunigungen in Geschwindigkeiten umgerechnet werden und dann ebenfalls miteinander verrechnet werden können. Die Verrechnung erfolgt vorteilhaft durch die Differenzbildung der Werte, das heißt durch Subtraktion. Andere Verrechnungsmethoden sind auch möglich. Es besteht auch die Möglichkeit, die Messwerte in einen Kalman-Filter einzugeben.

Eine weitere vorteilhafte Ausführungsform der Erfindung sieht vor, dass die Differenz achsenweise aus dem Beschleunigungssignal des Beschleunigungssensors des Tastkopfes und/oder des optischen Sensors mit jeweils einem Positionswert eines Maßstabes einer Achse nach Umwandlung in eine einheitliche physikalische Größe oder mit jeweils einem Beschleunigungssignal des Beschleunigungssensors gebildet wird.

Bei der achsenweisen Korrektur wird das Beschleunigungssignal des Beschleunigungssensors des Tastkopfes und/oder des optischen Sensors entweder mit jeweils einem Positionswert eines Maßstabes einer Achse oder mit jeweils einem Beschleunigungssignal des Beschleunigungssensors einer Achse gebildet.

Eine weitere vorteilhafte Ausführungsform der Erfindung sieht vor, dass die Korrektur der Messwerte nach Erfassen der Messwerte durchgeführt wird, oder dass eine Korrektur des Verfahrweges und/oder der Verfahrgeschwindigkeit während des Messvorganges durchgeführt wird. Bei der ersten Ausführungsform werden erst die Messwerte erfasst und die Messwerte im Nachhinein korrigiert.

Bei der zweiten Ausführungsform wird die Korrektur des Verfahrweges und/oder der Verfahrgeschwindigkeit während des Messvorganges durchgeführt. Hierdurch wird die Dynamik kompensiert. Je nach Korrektur wird beispielsweise der Tastkopf und/oder der optische Sensor bei der Antastung etwas weiter oder etwas weniger weit gefahren, je nachdem, ob beschleunigt oder abgebremst wird. Hierbei wird vorausschauend in die Zukunft gerechnet, um vor dem Anfahren des Werkstückes schon zu ermitteln, ob weniger weit oder weiter gefahren werden muss. In diesem Fall kann mit dem Korrekturwert an die dynamisch korrigierte Stelle mit dem Tastkopf gefahren werden. Es handelt sich hierbei um eine Online-Korrektur.

Eine weitere vorteilhafte Ausführungsform der Erfindung sieht vor, dass die Korrektur der Messwerte bei einer Einzelpunktantastung oder bei einem Scanverfahren oder bei einer berührungslosen Messung durchgeführt wird.

Die erfindungsgemäße Korrektur kann bei diesen Verfahren durchgeführt werden unabhängig davon, ob es sich um eine Einzelpunktantastung handelt oder um ein Scanverfahren oder um eine berührungslose Messung.

Das erfindungsgemäße Koordinatenmessgerät zur Vermessung von Werkstücken mit einem Tastkopf mit einem Taster mit einem Tastsensor, der als ein bei Berührung des Tasters an einem Werkstück ein Tastsignal erzeugender Tastsensor ausgebildet ist, oder mit einem Tastkopf mit einem optischen Sensor, oder mit einem optischen Sensor, und mit einem Beschleunigungssensor, der als ein bei Beschleunigungen des Tastkopfes und/oder des optischen Sensors ein Beschleunigungssignal erzeugender Beschleunigungssensor ausgebildet ist, mit mechanischen Vorrichtungen, über die der Tastkopf und/oder der optische Sensor relativ zum Werkstück bewegbar ist, mit Maßstäben, aus denen Maßstabswerte ermittelbar sind, aus denen die Position des Tastkopfes und/oder des optischen Sensors ermittelbar ist, mit wenigstens einer Steuer- und Auswerteeinheit, zeichnet sich dadurch aus, dass wenigstens ein weiterer Beschleunigungssensor an wenigstens einer der mechanischen Vorrichtungen angeordnet ist und dass die wenigstens eine Auswerte- und Steuereinheit als eine aus dem Beschleunigungssignal des Beschleunigungssensors und dem Beschleunigungssignal des weiteren Beschleunigungssensors einer Achse die Differenz bildende und die Differenz ein- oder zweimal integrierende Auswerte- und Steuereinheit ausgebildet ist und dass die Auswerte- und Steuereinheit als eine die Differenz zur Korrektur der Messwerte und/oder des Verfahrweges und/oder der Verfahrgeschwindigkeit verwendende Auswerte- und Steuereinheit ausgebildet ist.

Durch diese erfindungsgemäße Ausführungsform wird zum einen die Beschleunigung in dem Tastkopf und/oder in dem optischen Sensor als Beschleunigungssignal erfasst. Zum anderen wird in wenigstens einer mechanischen Vorrichtung, über die der Tastkopf und/oder der optische Sensor relativ zum Werkstück bewegt wird, das Beschleunigungssignal dieser mechanischen Vorrichtung erfasst.

Aus dem Beschleunigungssignal des Tastkopfes und/oder des optischen Sensors und einem Beschleunigungssignal einer der mechanischen Vorrichtungen wird die Differenz gebildet. Diese Differenz wird einmal oder zweimal integriert.

Das erfindungsgemäße Koordinatenmessgerät zur Vermessung von Werkstücken zur Durchführung des erfindungsgemäßen Verfahrens mit einem Tastkopf mit einem Taster, mit einem Tastsensor, der als ein bei Berührung des Tasters an einem Werkstück ein Tastsignal erzeugender Tastsensor ausgebildet ist, oder mit einem Tastkopf mit einem optischen Sensor, oder mit einem optischen Sensor, und mit einem Beschleunigungssensor, der als ein bei Beschleunigungen des Tastkopfes und/oder des optischen Sensors ein Beschleunigungssignal erzeugender Beschleunigungssensor ausgebildet ist, mit mechanischen Vorrichtungen, über die der Tastkopf und/oder der optische Sensor relativ zum Werkstück bewegbar ist, mit Maßstäben, aus denen Maßstabswerte ermittelbar sind, aus denen die Position des Tastkopfes und/oder des optischen Sensors ermittelbar ist, mit wenigstens einer Steuer- und Auswerteeinheit, zeichnet sich dadurch aus, dass die wenigstens eine Steuer- und Auswerteeinheit als eine das Beschleunigungssignal des Beschleunigungssensors des Tastkopfes und/oder des optischen Sensors und ein Positionssignal eines Maßstabes einer Achse durch Integrieren und/oder Differenzieren zu miteinander verrechenbaren physikalischen Größen umwandelnde und aus diesen Größen die Differenz bildende Auswerte- und Steuereinheit ausgebildet ist, und dass die Auswerte- und Steuereinheit als eine die Differenz zur Korrektur der Messwerte und/oder des Verfahrweges und/oder der Verfahrgeschwindigkeit verwendende Auswerte- und Steuereinheit ausgebildet ist.

Bei dieser Ausführungsform des Koordinatenmessgerätes ist lediglich der Beschleunigungssensor vorgesehen, der im Tastkopf und/oder in dem optischen Sensor angeordnet ist. Als zweiter Wert wird das Positionssignal eines Maßstabes einer Achse verwendet. Durch Integrieren und/oder Differenzieren werden miteinander verrechenbare physikalische Größen gebildet. Die Differenz dieser physikalischen Größen bilden einen Korrekturwert, der zur Korrektur der Messwerte und/oder des Verfahrweges und/oder der Verfahrgeschwindigkeit vorgesehen ist.

Eine vorteilhafte Ausführungsform des erfindungsgemäßen Koordinatenmessgerätes sieht vor, dass die mechanischen Vorrichtungen relativ zum Maßstab beweglich ausgebildet sind und dass der wenigstens eine weitere Beschleunigungssensor am beweglichen Teil der mechanischen Vorrichtung angeordnet ist.

Die mechanischen Vorrichtungen sind relativ zueinander und jeweils zu ihrem zugeordneten Maßstab beweglich angeordnet. Es kann sich hierbei um einen Werkzeugtisch und das Portal handeln. Es kann sich hierbei auch um das Portal und einen an dem Portal beweglich angeordneten Schlitten handeln. Darüber hinaus kann es sich auch um eine an dem Schlitten beweglich angeordnete Pinole handeln.

Beispielsweise ist an dem Werkzeugtisch ein Maßstab vorgesehen und in dem Portal, insbesondere in dem Portalfuß eine Gebervorrichtung. In diesem Fall kann der weitere Beschleunigungssensor in dem Portalfuß angeordnet sein.

Ein weiterer Maßstab ist an einer Traverse des Portales angeordnet. Eine Gebervorrichtung ist dann in dem beweglich an dem Portal angeordneten Schlitten vorgesehen. In diesem Fall ist in dem Schlitten ein Beschleunigungssensor angeordnet. Die Pinole ist beweglich an dem Schlitten angeordnet. Hierzu weist die Pinole einen Maßstab auf und eine Gebervorrichtung ist in dem Schlitten angeordnet. Der Beschleunigungssensor ist hierbei in der Pinole angeordnet.

Gemäß einer vorteilhaften Ausführungsform der Erfindung ist an dem oder den Maßstäben jeweils eine Gebervorrichtung zur Ermittlung der Maßstabswerte angeordnet.

Eine weitere vorteilhafte Ausführungsform der Erfindung sieht vor, dass der wenigstens eine weitere Beschleunigungssensor an einem Portal und/oder an einem Schlitten und/oder an einer Pinole des Koordinatenmessgerätes angeordnet ist.

Eine weitere vorteilhafte Ausführungsform der Erfindung sieht vor, dass der im Tastkopf und/oder im optischen Sensor angeordnete Beschleunigungssensor am gehäusefesten Teil des Tastkopfes und/oder des optischen Sensors angeordnet ist.

Hierdurch wird die Beschleunigung des Tastkopfes und/oder des optischen Sensors selbst erfasst.

Gemäß einer weiteren vorteilhaften Ausführungsform der Erfindung ist vorgesehen, dass die Beschleunigungssensoren als piezoelektrische Sensoren und/oder als Dehnungsmessstreifen und/oder als magnetische Sensoren ausgebildet sind. Die Beschleunigungssensoren können unterschiedlich ausgestaltet sein. Es kann sich hierbei um einen piezoelektrischen Sensor handeln, der einen piezoelektrischen Messgrößenaufnehmer und einen hieran befestigen Massekörper aufweist. Es kann aber auch ein Dehnungsmessstreifen verwendet werden, an dem ein Massekörper befestigt ist, oder ein magnetischer Sensor, bei dem ein an einer Feder aufgehängter Massekörper durch einen Magneten in einer Spule eine elektrische Spannung induziert. Bekannt sind beispielsweise auch miniaturisierte Beschleunigungssensoren, so genannte mikro-elektromechanische Systeme (MEMS), die aus Silizium hergestellt werden. Diese Sensoren sind Feder-Masse-Systeme, bei denen die Federn nur wenige mikrometerbreite Silizium-Stege sind und auch der Massekörper aus Silizium hergestellt ist, wobei durch die Auslenkung bei Beschleunigung zwischen dem gefedert aufgehängten Teil und einer festen Bezugselektrode eine Änderung der elektrischen Kapazität gemessen werden kann. Auch piezoresistive Widerstände werden in MEMS genutzt, um die Auslenkung zu messen.

Der Beschleunigungssensor kann prinzipiell beliebig ausgestaltet sein und an einer beliebigen Stelle im Bereich des Tastkopfes und/oder des optischen Sensors, jedoch am gehäusefesten Teil des Tastkopfes und/oder des optischen Sensors befestigt sein.

Gemäß einer weiteren vorteilhaften Ausführungsform der Erfindung ist vorgesehen, dass das Koordinatenmessgerät als ein ein Scanverfahren oder eine Einzelpunktantastung durchführendes Koordinatenmessgerät ausgebildet ist. Das Koordinatenmessgerät kann auch als ein berührungslose Messungen durchführendes Koordinatenmessgerät ausgebildet sein.

Das Koordinatenmessgerät, auf dem das erfindungsgemäße Verfahren ausgeführt wird, kann unterschiedlich ausgestaltet sein. Es kann sich beispielsweise um ein Portalmessgerät, ein Brückenmessgerät, ein Horizontalarmmessgerät oder ein Messgerät mit Drehgelenken handeln, so dass es auf die Mechanik, mit der der Tastkopf und/oder der optische Sensor relativ zum Werkstück bewegt wird, nicht ankommt.

Aus dem Beschleunigungssignal des Tastkopfes und/oder des optischen Sensors und einem Beschleunigungssignal einer der mechanischen Vorrichtungen wird die Differenz gebildet. Diese Differenz wird einmal oder zweimal integriert.

Weitere Merkmale und Vorteile der Erfindung ergeben sich anhand der zugehörigen Zeichnungen, in denen verschiedene Ausführungsformen eines erfindungsgemäßen Koordinatenmessgerätes nur beispielhaft dargestellt sind, ohne die Erfindung auf diese Ausführungsbeispiele zu beschränken. In den Zeichnungen zeigen:
- Fig. 1: ein Koordinatenmessgerät in perspektivischer Ansicht mit einem im Tastkopf angeordneten Beschleunigungssensor;
- Fig. 2: ein Koordinatenmessgerät in perspektivischer Ansicht mit einem im Tastkopf angeordneten Beschleunigungssensor und weiteren Beschleunigungssensoren in den mechanischen Vorrichtungen;
- Fig. 3: eine schematische Darstellung eines Schlittens auf Traverse und einer Pinole und eines Tastkopfes in Ruhestellung;
- Fig. 4: eine schematische Darstellung des Schlittens auf Traverse und der Pinole und des Tastkopfes gemäß Fig. 3 in Bewegung;
- Fig. 5: ein Koordinatenmessgerät in perspektivischer Ansicht mit einem in einem optischen Sensor angeordneten Beschleunigungssensor.

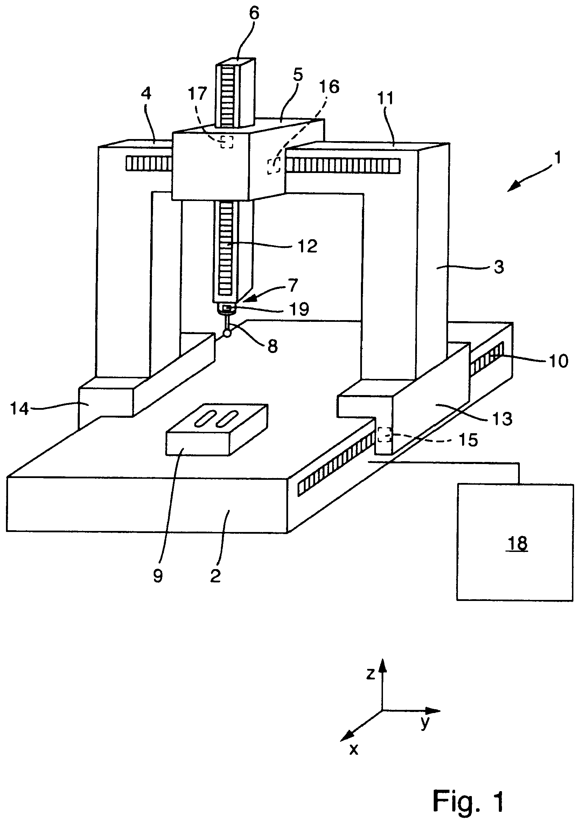

Fig. 1 zeigt ein Koordinatenmessgerät 1 mit einem Grundbett 2. An dem Grundbett ist in X-Richtung verschiebbar ein Portal 3 angeordnet. An einer Traverse 4 des Portales 3 ist ein Schlitten 5 in Y-Richtung verschiebbar angeordnet. An dem Schlitten 5 ist eine in Z-Richtung verschiebbare Pinole 6 angeordnet. An der Pinole 6 ist ein Tastkopf 7 angeordnet, an dem wiederum ein Tastsensor, im vorliegenden Beispiel ein Taststift 8 angeordnet ist.

Auf dem Grundbrett 2, welches den Werkstücktisch darstellt, ist ein Werkstück 9 zur Vermessung mit dem Koordinatenmessgerät 1 angeordnet.

Zur Erfassung der Positionen des Portales 3 des Schlittens 5 und der Pinole 6 sind Maßstäbe 10, 11, 12 vorgesehen. Der Maßstab 10 ist an dem Grundbett 2 angeordnet, der Maßstab 11 ist an der Traverse 4 des Portales 3 angeordnet und der Maßstab 12 ist an der Pinole 6 angeordnet. Das Portal 3 weist einen angetriebenen Portalfuß 13 auf und einen nicht angetriebenen Portalfuß 14. Der Maßstab 10 erfasst die Position des angetriebenen Portalfußes 13. Den Maßstäben zugeordnet sind Gebervorrichtungen 15, 16, 17, die lediglich schematisch dargestellt sind. Die Gebervorrichtung 15 ist in dem Portalfuß 13 angeordnet und wirkt mit dem Maßstab 10 zusammen. Die Gebervorrichtung 16 ist an dem Schlitten 5 angeordnet und wirkt mit dem Maßstab 11 zusammen. Die Gebervorrichtung 17 ist ebenfalls in dem Schlitten 5 angeordnet und wirkt mit dem Maßstab 12 der Pinole 6 zusammen.

Zur Auswertung der Gebervorrichtungen 15, 16, 17 sowie zur Steuerung des Antriebes (nicht dargestellt) ist (lediglich schematisch dargestellt) eine Auswerte- und Steuereinrichtung 18 vorgesehen.

Im Tastkopf 7 ist ein Beschleunigungssensor 19 angeordnet.

Gemäß einer ersten Ausführungsform der Erfindung wird die Position des Portalfußes 13 mittels der Gebervorrichtung 15 und dem Maßstab 10 bestimmt.

Der Beschleunigungssensor 19 in dem Tastkopf 7 erfasst ein Beschleunigungssignal.

Das Positionssignal des Portalfußes 13 wird zweimal differenziert, so dass eine Beschleunigung erhalten wird. Es wird die Differenz mit dem Beschleunigungssignal des Beschleunigungssensors 19 des Tastkopfes 7 gebildet und diese Größe wird zur Korrektur der Messwerte und/oder des Verfahrweges und/oder der Verfahrgeschwindigkeit verwendet.

Gemäß einer weiteren Ausführungsform der Erfindung wird ebenfalls mittels der Gebervorrichtung 15 des Portalfußes 13 die Position des Portalfußes 13 in Relation zum Maßstab 10 erfasst. Darüber hinaus wird das Beschleunigungssignal des Beschleunigungssensors 19 in den Tastkopf 7 erfasst. Das Beschleunigungssignal wird zweimal integriert, so dass als physikalische Größe eine Position erhalten wird. Es wird eine Subtraktion des aufintegrierten Beschleunigungssignales des Beschleunigungssensors 19 des Tastkopfes 7 und des Positionssignales des Portalfußes 13 durchgeführt. Dieser erhaltene Wert wird zur Korrektur der Messwerte und/oder des Verfahrweges und/oder der Verfahrgeschwindigkeit verwendet.

Dieses Verfahren kann auch anstelle oder zusätzlich zu dem beschriebenen Verfahren mit dem Positionssignal der Gebervorrichtung 15 mit den Positionssignalen der Gebervorrichtungen 16 und/oder 17 durchgeführt werden.

Es besteht die Möglichkeit, dass das Beschleunigungssignal des Beschleunigungssensors 19 nur mit dem Positionssignal der Gebervorrichtung 15 verrechnet wird. Das Beschleunigungssignal des Beschleunigungssensors 19 kann auch nur oder auch zusätzlich mit dem Positionssignal der Gebervorrichtung 16 verrechnet werden. Das Positionssignal des Beschleunigungssensors 19 kann zusätzlich oder auch ausschließlich mit dem Positionssignal der Gebervorrichtung 17 verrechnet werden.

An dem Tastkopf 7 kann an Stelle des Taststiftes 8 auch ein optischer Sensor (nicht dargestellt) eingewechselt werden.

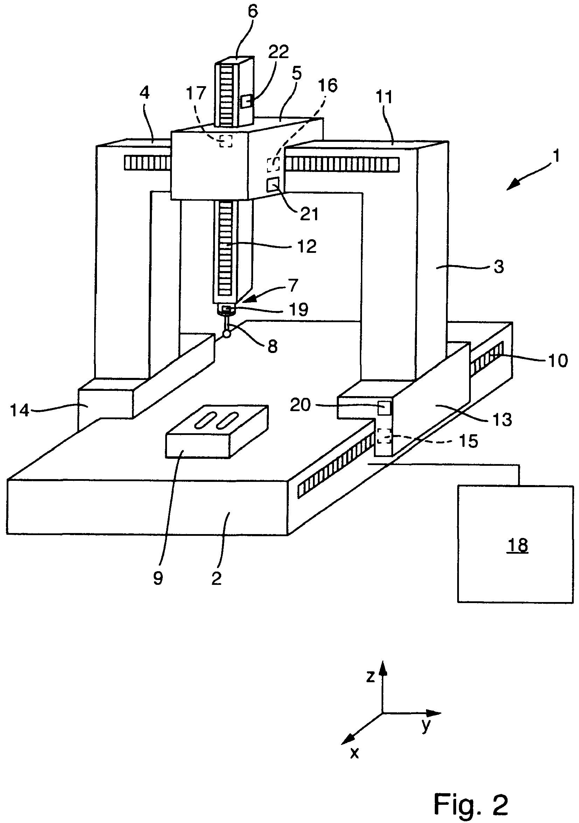

Fig. 2 zeigt das Koordinatenmessgerät 1. Gleiche Teile sind mit gleichen Bezugszahlen versehen.

Zusätzlich zu der Gebervorrichtung 15 ist in dem Portalfuß ein weiterer Beschleunigungssensor 20 angeordnet, der lediglich schematisch dargestellt ist.

Gemäß einer weiteren Ausführungsform der Erfindung wird das Beschleunigungssignal des Beschleunigungssensors 19 im Tastkopf 7 erfasst. Darüber hinaus wird das Beschleunigungssignal des Beschleunigungssensors 20 im Portalfuß 13 erfasst.

Es bestehen nun folgende Möglichkeiten:
1) Die Differenz aus beiden Beschleunigungssignalen wird gebildet und der Differenzwert wird einmal oder zweimal integriert. Der erhaltene Wert wird zur Korrektur der Messwerte und/oder des Verfahrweges und/oder der Verfahrgeschwindigkeit verwendet.
2) Das Beschleunigungssignal des Beschleunigungssensors 19 des Tastkopfes 7 und das Beschleunigungssignal des Beschleunigungssensors 20 des Portalfußes 13 werden erfasst. Beide Signale werden einmal oder zweimal integriert. Anschließend wird die Differenz der jeweils einmal oder zweimal aufintegrierten Signale gebildet. Dieser Wert wird zur Korrektur der Messwerte und/oder des Verfahrweges und/oder der Verfahrgeschwindigkeit verwendet.

Es besteht die Möglichkeit, zusätzliche Beschleunigungssensoren in dem Schlitten und der Pinole anzuordnen. Lediglich schematisch sind hierzu in dem Schlitten der Beschleunigungssensor 21 und in der Pinole der Beschleunigungssensor 22 dargestellt.

Zur Differenzbildung wird immer das integrierte oder nicht integrierte Beschleunigungssignal des Beschleunigungssensors 19 des Tastkopfes 7 verwendet. Dieses Signal wird einzeln mit den Beschleunigungssignalen der Beschleunigungssensoren 20, 21 oder 22 verrechnet. Es kann für jede Achse eine Ermittlung der Korrekturwerte erfolgen.

Mit dem erfindungsgemäßen Verfahren ist es möglich, eine Verformung von Strukturen des Koordinatenmessgerätes 1 zu erfassen.

Wird beispielsweise der Portalfuß, der der angetriebene Portalfuß des Portales 3 ist, bewegt, so läuft der Portalfuß 14 nach, wodurch eine Verformung des Portales entsteht. Diese Verformung wirkt sich auf den tatsächlichen Verfahrweg des Tastkopfes 7 aus. Mit dem erfindungsgemäßen Verfahren und dem erfindungsgemäßen Koordinatenmessgerät 1 kann diese Verformung über eine entsprechende Korrektur der Messwerte und/oder des Verfahrweges und/oder der Verfahrgeschwindigkeit kompensiert werden.

Es besteht gemäß der Erfindung auch die Möglichkeit, das Beschleunigungssignal des Beschleunigungssensors 19 des Tastkopfes 7 mit dem Beschleunigungssignal des Beschleunigungssensors 20 des Portalfußes 13 gemäß dem erfindungsgemäßen Verfahren zu verrechnen. Für die Y- oder Z-Achse kann auch jeweils das Signal der Beschleunigungssensoren 16 oder 17 verwendet werden. Es besteht jedoch auch die Möglichkeit, keine weiteren Beschleunigungssensoren 16 oder 17 vorzusehen, sondern in der Y- und Z-Richtung die Positionssignale zur Ermittlung des Korrekturwertes heranzuziehen, wie zur der Fig. 1 beschrieben.

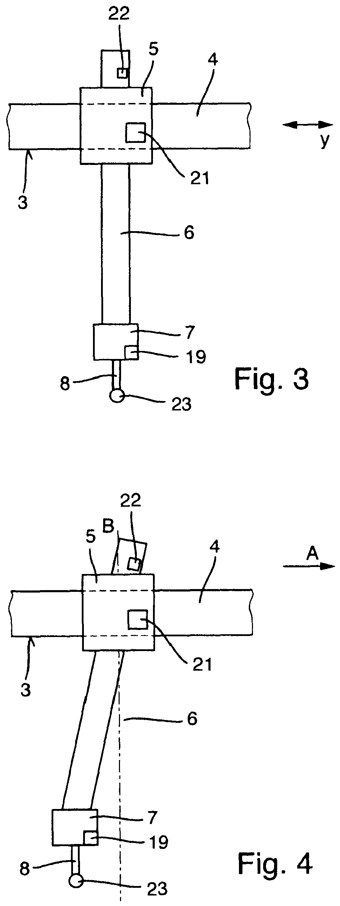

Fig. 3 zeigt den Schlitten 5, der an der Traverse 4 des Portales 3 des Koordinatenmessgerätes 1 angeordnet ist. An der Pinole 6 ist der Tastkopf 7 angeordnet. In dem Tastkopf 7 ist in dem gehäusefesten Teil der Beschleunigungssensor 19 angeordnet. An dem Tastkopf 7 ist der Taststift 8 angeordnet, der eine Tastkugel 23 zur Antastung des Werkstückes 9 (Fig. 1 und 2) aufweist. In dem Schlitten 5 ist darüber hinaus der Sensor 21 angeordnet, der ein Beschleunigungssignal des Schlittens 5 misst. Der Schlitten ist in Y-Richtung, wie mit dem Pfeil dargestellt, beweglich.

Fig. 4 zeigt die in Fig. 3 dargestellte Pinole. Der Schlitten 5 wird in Richtung des Pfeils A bewegt. Aufgrund der Trägheit der Masse befindet sich der Schlitten 5 in der Achse B, während die Pinole 6 und der Tastkopf 7 nachlaufen. In Fig. 4 ist dieses Nachlaufen zur Verdeutlichung viel stärker dargestellt, als es in Wirklichkeit ist.

Um das Nachlaufen zu erfassen und anschließend korrigieren zu können, wird das Beschleunigungssignal des Beschleunigungssensors 21 erfasst sowie das Beschleunigungssignal des Beschleunigungssensors 19. Diese beiden Signale werden voneinander subtrahiert und es wird ein- oder zweimal integriert. Es besteht auch die Möglichkeit, die Signale erst ein- oder zweimal zu integrieren und dann die Differenz der Signale zu bilden. Aus diesen Werten, insbesondere wenn zweimal integriert wird, wird die Wegstrecke erfasst, um die die Pinole sich unerwünschterweise auslenkt gegenüber der Achse B.

Der Korrekturwert kann entweder verwendet werden, um die Dynamik der Auslenkung zu kompensieren. Es besteht zum Beispiel die Möglichkeit, den Schlitten 5 um den Weg der Auslenkung weiter fahren zu lassen. Es kann mit dem Korrekturwert an die dynamisch korrigierte Stelle gefahren werden.

Die andere Möglichkeit besteht darin, im Nachhinein die Messwerte mit den erfassten und ermittelten Korrekturwerten zu korrigieren.

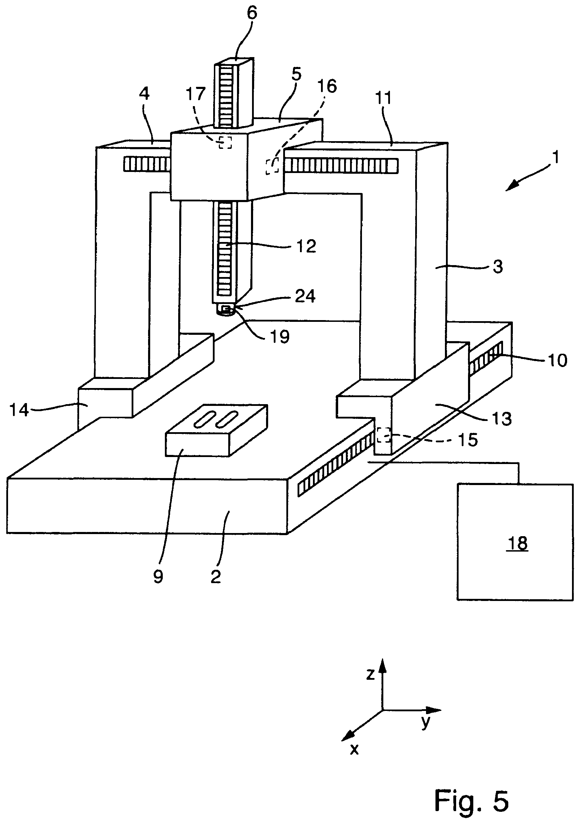

Fig. 5 zeigt ein Koordinatenmessgerät 1 mit einem optischen Sensor 24. Gleiche Teile sind mit gleichen Bezugszahlen versehen. Das Verfahren wird analog zu Fig. 1 angewendet. Es ist lediglich der taktile Tastkopf 7 gegen den optischen Sensor 24 eingewechselt worden.

### Bezugszahlen

- 1: Koordinatenmessgerät
- 2: Grundbett
- 3: Portal
- 4: Traverse
- 5: Schlitten
- 6: Pinole
- 7: Tastkopf
- 8: Taststift
- 9: Werkstück
- 10: Maßstab Grundbett/Portal
- 11: Maßstab Portal/Schlitten
- 12: Maßstab Schlitten/Pinole
- 13: Portalfuß angetrieben
- 14: Portalfuß nicht angetrieben
- 15: Gebervorrichtung Portal
- 16: Gebervorrichtung Schlitten
- 17: Gebervorrichtung Pinole
- 18: Auswerte- und Steuereinrichtung
- 19: Beschleunigungssensor Tastkopf
- 20: Beschleunigungssensor Portal
- 21: Beschleunigungssensor Schlitten
- 22: Beschleunigungssensor Pinole
- 23: Tastkugel
- 24: optischer Sensor
- A: Pfeil

## Patentansprüche

1. Verfahren zur Koordinatenmessung an Werkstücken auf einem Koordinatenmessgerät (1) mit einem Tastkopf (7) und/oder einem optischen Sensor (24), wobei der Tastkopf (7) und/oder der optische Sensor einen Beschleunigungssensor (19) aufweist, der bei Beschleunigungen des Tastkopfes (7) und/oder des optischen Sensors (24) ein Beschleunigungssignal erzeugt, wobei der Tastkopf (7) und/oder der optische Sensor mit mechanischen Vorrichtungen relativ zum Werkstück (9) bewegt wird, wobei mit Maßstäben (10, 11, 12), aus denen Maßstabswerte ermittelt werden, die Position des Tastkopfes (7) und/oder des optischen Sensors (24) als Positionswert für mindestens eine Achse (X, Y, Z) ermittelt wird,
**dadurch gekennzeichnet, dass** das Beschleunigungssignal des Beschleunigungssensors (19) des Tastkopfes (7) und/oder des optischen Sensors (24) und ein Positionssignal eines Maßstabes (10, 11, 12) einer Achse und/oder wenigstens eines weiteren Beschleunigungssensors (20, 21, 22), der an einer der mechanischen Vorrichtungen angeordnet ist und die Beschleunigung der wenigstens einen mechanischen Vorrichtung (3, 5, 6) erfasst, durch Integrieren und/oder Differenzieren zu miteinander verrechenbaren physikalischen Größen umgewandelt werden, und dass aus diesen Größen die Differenz gebildet wird, und dass die Differenz zur Korrektur der Messwerte und/oder des Verfahrweges und/oder der Verfahrgeschwindigkeit verwendet werden.

2. Verfahren nach Anspruch 1, **dadurch gekennzeichnet, dass** der Tastkopf (7) einen Taster (8) und einem dem Taster (8) zugeordneten Tastsensor aufweist, der bei Berührung eines Werkstückes (9) mit dem Taster (8) ein Tastsignal erzeugt, bei dem Maßstabswerte ermittelt werden, wobei aufgrund der Maßstabswerte die Position des Tastkopfes (7) bei der Berührung des Werkstückes (9) ermittelt wird.

3. Verfahren nach Anspruch 1, **dadurch gekennzeichnet, dass** der Tastkopf (7) einen optischen Sensor (24) aufweist, mit dem eine berührungslose Messung des Werkstückes erfolgt.

4. Verfahren nach einem der vorhergehenden Ansprüche, **dadurch gekennzeichnet,**
- **dass** das Beschleunigungssignal des Beschleunigungssensors (19) des Tastkopfes (7) und/oder des optischen Sensors (24) zwei Mal integriert wird, und dass aus einem Positionswert einer Achse und dem integrierten Wert des Beschleunigungssignales eine Differenz gebildet wird,
- oder dass der Positionswert einer Achse zwei Mal differenziert wird, und dass die Differenz aus dem differenzierten Positionswert und dem Beschleunigungssignal des Beschleunigungssensors (19) des Tastkopfes (7) und/oder des optischen Sensors (24) gebildet wird.

5. Verfahren nach einem der Ansprüche 1 bis 3, **dadurch gekennzeichnet, dass** mit dem wenigstens einen weiteren Beschleunigungssensor (20, 21, 22), der an wenigstens einer der mechanischen Vorrichtungen angeordnet ist, die Beschleunigung der wenigstens einen mechanischen Vorrichtung (3, 5, 6) erfasst wird,
- und dass die Differenz des Beschleunigungssignales des an dem Tastkopf (7) und/oder des an dem optischen Sensor (24) angeordneten Beschleunigungssensors (19) und dem Beschleunigungssignal des wenigstens einen weiteren Beschleunigungssensors (20, 21, 22) wenigstens einmal integriert wird,
- oder dass das Beschleunigungssignal des an dem Tastkopf (7) und/oder des an dem optischen Sensor (24) angeordneten Beschleunigungssensors (19) und das Beschleunigungssignal des wenigstens einen weiteren Beschleunigungssensors (20, 21, 22) wenigstens einmal integriert wird,
- und dass aus den integrierten Werten die Differenz gebildet wird.

6. Verfahren nach Anspruch 1, **dadurch gekennzeichnet, dass** das Beschleunigungssignal des Beschleunigungssensors (19) des Tastkopfes (7) und/oder des optischen Sensors (24) einmal integriert wird, und dass ein Positionswert einer Achse einmal differenziert wird, und dass aus diesen Werten eine Differenz gebildet wird.

7. Verfahren nach einem der vorhergehenden Ansprüche, **dadurch gekennzeichnet, dass** die physikalischen Größen "Position" zwei Mal differenziert werden oder die physikalischen Größen "Beschleunigung" zwei Mal integriert werden.

8. Verfahren nach einem der vorhergehenden Ansprüche, **dadurch gekennzeichnet, dass** die Differenz achsenweise aus dem Beschleunigungssignal des Beschleunigungssensors (19) des Tastkopfes (7) und/oder des optischen Sensors (24) mit jeweils einem Positionswert eines Maßstabes (10, 11, 12) einer Achse nach Umwandlung in eine einheitliche physikalische Größe oder mit jeweils einem Beschleunigungssignal des Beschleunigungssensors (20, 21, 22) gebildet wird.

9. Verfahren einem der vorhergehenden Ansprüche,
**dadurch gekennzeichnet, dass** die Korrektur der Messwerte nach Erfassen der Messwerte durchgeführt wird oder dass eine Korrektur des Verfahrweges und/oder der Verfahrgeschwindigkeit während des Messvorganges durchgeführt wird.

10. Verfahren nach einem der vorhergehenden Ansprüche, **dadurch gekennzeichnet, dass** die Korrektur der Messwerte bei einer Einzelpunktmessung oder bei einem Scanverfahren oder bei einer berührungslosen Messung durchgeführt wird.

11. Koordinatenmessgerät (1) zur Vermessung von Werkstücken
- mit einem Tastkopf (7), mit einem Taster (8), mit einem Tastsensor, der als ein bei Berührung des Tasters (8) an einem Werkstück (9) ein Tastsignal erzeugender Tastsensor ausgebildet ist, oder
- mit einem Tastkopf (7) mit einem optischen Sensor (24), oder
- mit einem optischen Sensor (24),
- und mit einem Beschleunigungssensor (19), der als ein bei Beschleunigungen des Tastkopfes (7) und/oder des optischen Sensors (24) ein Beschleunigungssignal erzeugender Beschleunigungssensor (19) ausgebildet ist,- mit mechanischen Vorrichtungen (3, 5, 6), über die der Tastkopf (7) und/oder der optische Sensor relativ zum Werkstück (9) bewegbar ist, mit Maßstäben (10, 11, 12), aus denen Maßstabswerte ermittelbar sind, aus denen die Position des Tastkopfes (7) und/oder des optischen Sensors (24) ermittelbar ist,
- mit wenigstens einer Auswerte- und Steuereinheit (18),
**dadurch gekennzeichnet, dass** wenigstens ein weiterer Beschleunigungssensor an wenigstens einer der mechanischen Vorrichtungen angeordnet ist, und dass die wenigstens eine Auswerte- und Steuereinheit (18) als eine aus dem Beschleunigungssignal des Beschleunigungssensors (19) und dem Beschleunigungssignal des weiteren Beschleunigungssensors (20, 21, 22) einer Achse die Differenz bildende und die Differenz ein oder zwei Mal integrierende Auswerte- und Steuereinheit (18) ausgebildet ist, und dass die Auswerte- und Steuereinheit (18) als eine die Differenz zur Korrektur der Messwerte und/oder des Verfahrweges und/oder der Verfahrgeschwindigkeit verwendende Auswerte-und Steuereinheit (18) ausgebildet ist.

12. Koordinatenmessgerät zur Vermessung von Werkstücken zur Durchführung des Verfahrens nach Anspruch 1,
- mit einem Tastkopf (7), mit einem Taster (8), mit einem Tastsensor, der als ein bei Berührung des Tasters an einem Werkstück (9) ein Tastsignal erzeugender Tastsensor ausgebildet ist, oder
- mit einem Tastkopf (7) mit einem optischen Sensor (24), oder
- mit einem optischen Sensor (24),
- und mit einem Beschleunigungssensor (19), der als ein bei Beschleunigungen des Tastkopfes (7) und/oder des optischen Sensors (24) ein Beschleunigungssignal erzeugender Beschleunigungssensor (19) ausgebildet ist,- mit mechanischen Vorrichtungen, über die der Tastkopf (7) und/oder der optische Sensor relativ zum Werkstück (9) bewegbar ist, mit Maßstäben (10, 11, 12), aus denen Maßstabswerte ermittelbar sind, aus denen die Position des Tastkopfes (7) und/oder des optischen Sensors (24) ermittelbar ist,
- mit wenigstens einer Auswerte- und Steuereinheit (18),
**dadurch gekennzeichnet, dass** die wenigstens eine Auswerte- und Steuereinheit (18) als eine das Beschleunigungssignal des Beschleunigungssensors (19) des Tastkopfes (7) und/oder des optischen Sensors (24) und ein Positionssignal eines Maßstabes (10, 11, 12) einer Achse durch Integrieren und/oder Differenzieren zu miteinander verrechenbaren physikalischen Größen umwandelnde und aus diesen Größen die Differenz bildende Auswerte- und Steuereinheit (18) ausgebildet ist, und dass die Auswerte- und Steuereinheit (18) als eine die Differenz zur Korrektur der Messwerte und/oder des Verfahrweges und/oder der Verfahrgeschwindigkeit verwendende Auswerte- und Steuereinheit (18) ausgebildet ist.

13. Koordinatenmessgerät nach Anspruch 11, **dadurch gekennzeichnet, dass** die mechanischen Vorrichtungen relativ zum Maßstab (10, 11, 12) beweglich ausgebildet sind und der wenigstens eine weitere Beschleunigungssensor (20, 21, 22) am beweglichen Teil der mechanischen Vorrichtung (3, 5, 6) angeordnet ist.

14. Koordinatenmessgerät nach Anspruch 11 , 12 oder 13, **dadurch gekennzeichnet, dass** an dem oder den Maßstäben (10, 11, 12) jeweils eine Gebervorrichtung (15, 16, 17) zur Ermittlung der Maßstabswerte angeordnet ist.

15. Koordinatenmessgerät nach einem der Ansprüche 12, 13 oder 14, **dadurch gekennzeichnet, dass** der wenigstens eine weitere Beschleunigungssensor an einem Portal (3) und/oder an einem Schlitten (5) und/oder an einer Pinole (6) des Koordinatenmessgerätes (1) angeordnet ist.

16. Koordinatenmessgerät nach einem der Ansprüche 11 bis 15, **dadurch gekennzeichnet, dass** der im Tastkopf (7) und/oder in dem optischen Sensor (24) angeordnete Beschleunigungssensor (19) am gehäusefesten Teil des Tastkopfes (7) und/oder des optischen Sensors (24) angeordnet ist.

17. Koordinatenmessgerät nach einem der Ansprüche 11 bis 16, **dadurch gekennzeichnet, dass** die Beschleunigungssensoren (19, 20, 21, 22) als piezoelektrische Sensoren und/oder als Dehnungsmessstreifen und/oder als magnetische Sensoren und/oder als miniaturisierte Beschleunigungssensoren (MEMS) ausgebildet sind.

18. Koordinatenmessgerät nach einem der Ansprüche 11 bis 17, **dadurch gekennzeichnet, dass** das Koordinatenmessgerät (1) als ein ein Scan-Verfahren und/oder eine Einzelpunktantastung und/oder eine berührungslose Messung ausführendesKoordinatenmessgerät (1) ausgebildet ist.
